# FASCICULE DE BREVET EUROPEEN

(11) **EP 3 959 172 B1**
(45) Date de publication et mention de la délivrance du brevet: **08.01.2025**
(21) Numéro de dépôt: 20719206.3
(22) Date de dépôt: 21.04.2020
(51) Int. Cl.: C01B 21/086, C01B 21/093, C07C 303/40, C07F 1/02, H01M 10/0525, H01M 10/0568

(54) **PROCEDE DE PREPARATION DU BIS(FLUOROSULFONYLE) IMIDE**
VERFAHREN ZUR HERSTELLUNG VON BIS(FLUORSULFONYL)IMID
PROCESS FOR PREPARING BIS(FLUOROSULFONYL) IMIDE

(30) Priorité: 25.04.2019 FR 1904384
(43) Date de publication de la demande: 02.03.2022
(73) Titulaire: ARKEMA FRANCE, 92700 Colombes (FR)
(72) Inventeur: DEUR-BERT, Dominique, 69491 PIERRE-BENITE CEDEX (FR)
(74) Mandataire: Arkema Patent
(86) Numéro de dépôt international: PCT/EP2020/061064
(87) Numéro de publication internationale: WO 2020/216736

(56) Documents cités:
- WO-A1-2015/012897
- WO-A1-2017/096333

## Description

### Domaine technique

La présente invention concerne un procédé de préparation de bis(fluorosulfonyle) imide. En particulier, la présente invention concerné un procédé de préparation de bis(fluorosulfonyle) imide à partir de bis(halosulfonyle) imide.

### Technique antérieure

Les anions de type sulfonylimide, de par leur très faible basicité, sont de plus en plus utilisés dans le domaine du stockage d'énergie sous forme de sels inorganiques dans les batteries, ou de sels organiques dans les super condensateurs ou dans le domaine des liquides ioniques. Le marché des batteries étant en plein essor et la réduction des coûts de fabrication des batteries devenant un enjeu majeur, un procédé de synthèse à grande échelle et à bas coût de ce type d'anions est nécessaire.

Dans le domaine spécifique des batteries Li-ion, le sel actuellement le plus utilisé est le LiPF₆ mais ce sel montre de nombreux désavantages tels qu'une stabilité thermique limitée, une sensibilité à l'hydrolyse et donc une plus faible sécurité de la batterie. Récemment de nouveaux sels possédant le groupement FSO₂⁻ ont été étudiés et ont démontré de nombreux avantages comme une meilleure conductivité ionique et une résistance à l'hydrolyse. L'un de ces sels, le LiFSI (LiN(FSO₂)₂) a montré des propriétés très intéressantes qui font de lui un bon candidat pour remplacer le LiPF₆.

Il existe divers procédés de préparation du LiFSI. WO2009/123328 décrit notamment la préparation de LiFSI à partir du bis(chlorosulfonyle) imide, via différentes étapes de préparation de sels intermédiaires, tels que par exemple un sel de zinc de bis(fluorosulfonyle) imide, suivi d'un sel d'ammonium de bis(fluorosulfonyle) imide.

WO 2017/096333 A1 décrit un procédé de préparation du bis(fluorosulfonyl)imide à partir du bis(chlorosulfonyl)imide et de l'acide fluorhydrique.

Un des intermédiaires réactionnels pour arriver au LiFSI est le bis(fluorosulfonyle) imide. WO 2015/012897 décrit la préparation du bis(fluorosulfonyle) imide par fluoration du bis(halosulfonyle) en présence d'acide fluorhydrique. La préparation du bis(fluorosulfonyle) imide, (HFSI), est obtenu dans des conditions de reflux d'acide fluorhydrique. La mise en œuvre du procédé dans ces conditions peut favoriser la formation de produits secondaires non désirés. En outre, les conditions opératoires appliquées dans ce procédé nécessitent un apport énergétique important ce qui augmente l'empreinte carbone de celui-ci.

Il existe donc encore un besoin d'un procédé de préparation de bis(fluorosulfonyle) imide ne présentant pas les inconvénients susmentionnés.

### Résumé de l'invention

Selon un premier aspect, la présente invention fournit un procédé de préparation du bis(fluorosulfonyle) imide comprenant les étapes de :
i) - la fourniture d'un courant **A1** comprenant de l'acide fluorhydrique ;
   - la fourniture d'un réacteur contenant une phase liquide **A2** comprenant du bis(halosulfonyle) imide ;
   - la fourniture d'au moins un dispositif de mélange connecté à l'entrée dudit réacteur ;
ii) l'alimentation dudit au moins un dispositif de mélange par la phase liquide **A2** et par ledit courant **A1**;
iii) mise en contact, dans ledit dispositif de mélange, de ladite phase liquide **A2** avec ledit courant **A1,** pour former un mélange réactionnel **B** comprenant bis(fluorosulfonyle) imide ;
iv) l'introduction du mélange réactionnel **B** produit à l'étape iii) dans la phase liquide **A2** dudit réacteur.

Selon un mode de réalisation préféré, le procédé est mis en œuvre en mode discontinu et la phase liquide **A2** contenue dans ledit réacteur est soutirée, de préférence en continu, pour alimenter ledit au moins un dispositif de mélange à l'étape ii).

Selon un mode de réalisation préféré, ledit procédé comprend l'étape v) de répétition des étapes ii) à iv) jusqu'à l'obtention d'une phase liquide **A2** comprenant au moins 95% en poids de bis(fluorosulfonyle) imide.

Selon un mode de réalisation préféré, l'acide fluorhydrique est sous forme gazeuse et ledit au moins un dispositif de mélange est un hydrolaveur.

Selon un mode de réalisation préféré, l'acide fluorhydrique est sous forme liquide et ledit au moins un dispositif de mélange est un mélangeur statique.

Selon un mode de réalisation préféré, la vitesse d'introduction de l'acide fluorhydrique contenu dans ledit courant **A1** dans ledit au moins un dispositif de mélange est d'au moins 1 mole d'HF / mole de bis(halosulfonyle) imide / heure et, de préférence d'au plus 300 moles d'HF / mole de bis(halosulfonyle) imide / heure.

Selon un mode de réalisation préféré, l'étape iii) est mise en œuvre avec un ratio molaire HF/[bis(halosulfonyle) imide] d'au moins 2,0 et d'au plus 3,0.

Selon un mode de réalisation préféré, le composé bis(halosulfonyle) imide est le bis(chlorosulfonyle) imide.

Selon un troisième aspect, la présente invention fournit un procédé de préparation de sel de lithium de bis(fluorosulfonyle) imide comprenant les étapes :
a) mise en œuvre du procédé de préparation du bis(fluorosulfonyle) imide selon la présente invention ;
b) mise en contact du bis(fluorosulfonyle) imide avec une composition comprenant au moins un sel de lithium pour former ledit sel de lithium de bis(fluorosulfonyle) imide.

Selon un quatrième aspect, la présente invention fournit une installation pour la mise en œuvre du procédé de préparation du bis(fluorosulfonyle) imide comprenant :
- un réacteur contenant une phase liquide **A2** comprenant du bis(halosulfonyle) imide ;
- une ligne d'amenée de ladite phase liquide **A2** connectée audit réacteur.
- au moins un dispositif de mélange dont la sortie est connectée à l'entrée dudit réacteur ;
- une ligne d'amenée d'un courant **A1** comprenant de l'acide fluorhydrique et connectée à l'entrée dudit dispositif de mélange ;
- une pompe connectée à la sortie dudit réacteur ;
- une ligne de sortie configurée pour extraire les gaz contenus dans le ciel dudit réacteur ; et
- une conduite reliant ladite pompe à l'entrée dudit dispositif de mélange ; et
- optionnellement un échangeur thermique disposé sur ladite conduite et connecté audit dispositif de mélange et à ladite pompe.

Selon un cinquième aspect, la présente invention fournit une installation pour la mise en œuvre du procédé de préparation de préparation du bis(fluorosulfonyle) imide comprenant :
- un séparateur et au moins un dispositif de mélange, la sortie dudit au moins dispositif de mélange étant connecté à l'entrée dudit séparateur ;
- une ligne d'amenée d'une phase liquide **A2** comprenant du bis(halosulfonyle) imide connectée à l'entrée dudit dispositif de mélange.
- une ligne d'amenée d'un courant **A1** comprenant de l'acide fluorhydrique et connectée à l'entrée dudit dispositif de mélange ;
- une pompe connectée à la sortie dudit séparateur ;
- une ligne de sortie configurée pour extraire les gaz contenus dans le ciel dudit séparateur ; et
- une ligne de sortie connectée à ladite pompe.

### Brève description des figures

[Fig. 1] représente schématiquement une installation pour la mise en œuvre en mode discontinu du procédé de préparation du bis(fluorosulfonyle) imide selon un mode de réalisation particulier.
[Fig. 2] représente schématiquement une installation pour la mise en œuvre en mode discontinu du procédé de préparation du bis(fluorosulfonyle) imide selon un mode de réalisation particulier dans lequel deux dispositifs de mélange sont disposés en série.
[Fig. 3] représente schématiquement une installation pour la mise en œuvre en mode continu du procédé de préparation du bis(fluorosulfonyle) imide selon un mode de réalisation particulier.
[Fig. 4] représente schématiquement une installation pour la mise en œuvre en mode continu du procédé de préparation du bis(fluorosulfonyle) imide selon un autre mode de réalisation particulier.

### Description détaillée de l'invention

Selon un premier aspect de la présente invention, un procédé de préparation du bis(fluorosulfonyle) imide est fourni. Ledit procédé comprend les étapes de :
i) - la fourniture d'un courant **A1** comprenant de l'acide fluorhydrique ;
   - la fourniture d'un réacteur contenant une phase liquide **A2** comprenant du bis(halosulfonyle) imide ;
   - la fourniture d'au moins un dispositif de mélange connecté audit réacteur ;
ii) l'alimentation dudit au moins un dispositif de mélange par la phase liquide **A2** et par ledit courant **A1;**
iii) mise en contact, dans ledit dispositif de mélange, de ladite phase liquide **A2** avec ledit courant **A1,** pour former un mélange réactionnel **B** comprenant bis(fluorosulfonyle) imide ;
iv) l'introduction du mélange réactionnel **B** produit à l'étape iii) dans la phase liquide **A2** dudit réacteur.

De préférence, la phase liquide **A2** consiste en du bis(halosulfonyle) imide.

De préférence, ladite phase liquide **A2** et ledit courant **A1** alimentent à co-courant ledit dispositif de mélange. Ceci permet d'améliorer l'efficacité de du procédé.

De préférence, ledit bis(fluorosulfonyle) imide compris dans ledit mélange réactionnel **B** est sous forme liquide. De préférence, dans ce premier aspect de l'invention, ledit procédé est mis en œuvre en mode discontinu, c'est-à-dire que le bis(fluorosulfonyle) imide n'est pas récupéré en continu. Ainsi, selon un mode de réalisation préféré, le procédé est mis en œuvre en mode discontinu et la phase liquide **A2** comprenant le bis(halosulfonyle) imide est introduite initialement dans ledit réacteur. Selon un mode de réalisation préféré, le procédé est mis en œuvre en mode discontinu et la phase liquide **A2** contenue dans ledit réacteur est soutirée, de préférence en continu, pour alimenter ledit au moins un dispositif de mélange à l'étape ii).

De préférence, ledit courant **A1** alimente ledit dispositif de mélange en continu.

De préférence, ladite phase liquide **A2** comprend du bis(halosulfonyle) imide mais est dépourvu de solvant organique. Ainsi, l'étape iii) de fluoration du bis(halosulfonyle) imide en bis(fluorosulfonyle) imide est mis en œuvre en l'absence de solvant organique.

Selon un mode de réalisation particulier alternatif, ladite phase liquide **A2** comprend du bis(halosulfonyle) imide et un solvant organique. Le solvant organique SO1 peut être choisi parmi les esters, les nitriles, les éthers, les solvants aromatiques, les carbonates, les solvants cycliques ou hétérocycliques et leurs mélanges. De préférence, le solvant organique SO1 est choisi dans le groupe constitué de l'acétate de méthyle, l'acétate de butyle, de l'acétate d'éthyle, de l'acétate de propyle, de l'acétate d'isopropyle, du butyronitrile, du valéronitrile, du benzonitrile, du diisopropyl éther, du 2-méthoxy-2-méthylbutane, du cyclopentylméthyl éther, du benzène, du toluène, du chlorobenzène, du dichlorobenzène, des xylènes, de l'éthylbenzène, 1,4-dioxane, du carbonate de diméthyle, du carbonate d'éthylène, du sulfolane et de leurs mélanges.

L'acide fluorhydrique contenu dans ledit courant **A1** réagit avec le bis(halosulfonyle) imide contenu dans ladite phase liquide **A2** pour former le bis(fluorosulfonyle) imide. Le bis(halosulfonyle) imide peut être le bis(chlorosulfonyle) imide, le bis(bromosulfonyle) imide ou le bis(iodosulfonyle) imide ou un mélange de ceux-ci. De préférence, dans la présente demande, le bis(halosulfonyle) imide est le bis(chlorosulfonyle) imide.

De préférence, l'acide fluorhydrique est de l'acide fluorhydrique anhydre. Dans le cadre de l'invention, par « acide fluorhydrique anhydre », on entend de l'HF contenant moins de 500 ppm d'eau, de préférence moins de 300 ppm d'eau de manière préférée moins de 200 ppm d'eau.

De préférence, l'étape iii) est mise en œuvre dans des conditions de pression et de température de sorte à maintenir le bis(halosulfonyle) imide et le bis(fluorosulfonyle) imide produit sous forme liquide.

Ainsi, l'étape iii) peut être mise en œuvre à pression atmosphérique ou à une pression supérieure à la pression atmosphérique. De préférence, l'étape iii) peut être mise en œuvre à une pression inférieure à 10 bara, avantageusement à une pression inférieure à 9 bara, de préférence inférieure à 8 bara, plus préférentiellement inférieure à 7 bara, en particulier inférieure à 6 bara.

L'étape iii) peut être mise en œuvre à une température supérieure à 0°C, avantageusement supérieure à 5°C, de préférence supérieure à 10°C, plus préférentiellement supérieure à 15°C. De préférence, l'étape iii) est mise en œuvre à une température inférieure à 150°C, avantageusement inférieure à 140°C, de préférence inférieure à 130°C, plus préférentiellement inférieure à 120°C, en particulier inférieure à 110°C, plus particulièrement inférieure à 100°C, de manière privilégiée inférieure à 90°C, de manière avantageusement privilégiée inférieure à 80°C, de manière préférentiellement privilégiée inférieure à 70°C, de manière plus préférentiellement privilégiée inférieure à 60°C, de manière particulièrement privilégiée inférieure 50°C.

Ainsi, l'étape iii) peut être mise en œuvre à une température supérieure à 0°C, avantageusement supérieure à 5°C, de préférence supérieure à 10°C, plus préférentiellement supérieure à 15°C ; et à une température inférieure à 150°C, avantageusement inférieure à 140°C, de préférence inférieure à 130°C, plus préférentiellement inférieure à 120°C, en particulier inférieure à 110°C, plus particulièrement inférieure à 100°C, de manière privilégiée inférieure à 90°C, de manière avantageusement privilégiée inférieure à 80°C, de manière préférentiellement privilégiée inférieure à 70°C, de manière plus préférentiellement privilégiée inférieure à 60°C, de manière particulièrement privilégiée inférieure 50°C.

De préférence, l'étape iii) peut être mise en œuvre à une température supérieure à 0°C, avantageusement supérieure à 5°C, de préférence supérieure à 10°C, plus préférentiellement supérieure à 15°C ; et à une température inférieure à 150°C, avantageusement inférieure à 140°C, de préférence inférieure à 130°C, plus préférentiellement inférieure à 120°C, en particulier inférieure à 110°C, plus particulièrement inférieure à 100°C, de manière privilégiée inférieure à 90°C, de manière avantageusement privilégiée inférieure à 80°C, de manière préférentiellement privilégiée inférieure à 70°C, de manière plus préférentiellement privilégiée inférieure à 60°C, de manière particulièrement privilégiée inférieure 50°C ; et à pression atmosphérique.

De préférence, l'étape iii) peut être mise en œuvre à une température supérieure à 0°C, avantageusement supérieure à 5°C, de préférence supérieure à 10°C, plus préférentiellement supérieure à 15°C; et à une température inférieure à 150°C, avantageusement inférieure à 140°C, de préférence inférieure à 130°C, plus préférentiellement inférieure à 120°C, en particulier inférieure à 110°C, plus particulièrement inférieure à 100°C, de manière privilégiée inférieure à 90°C, de manière avantageusement privilégiée inférieure à 80°C, de manière préférentiellement privilégiée inférieure à 70°C, de manière plus préférentiellement privilégiée inférieure à 60°C, de manière particulièrement privilégiée inférieure 50°C ; et à une pression supérieure à 1 bara ; et inférieure à 10 bara, avantageusement à une pression inférieure à 9 bara, de préférence inférieure à 8 bara, plus préférentiellement inférieure à 7 bara, en particulier inférieure à 6 bara.

De préférence, au cours de l'étape ii), iii) et iv) la température de ladite phase liquide **A2** est maintenue substantiellement constante. Dans la présente demande, on entend par « substantiellement constante » une variation de température d'au maximum 5°C en valeur absolue, de préférence d'au maximum 3°C en valeur absolue, encore plus préférentiellement d'au maximum 2°C en valeur absolue, voire en particulier d'au maximum 1°C en valeur absolue. Ainsi, au cours de l'étape ii), iii) et iv), la température de ladite phase liquide **A2** varie d'au maximum 5°C en valeur absolue, de préférence d'au maximum 3°C en valeur absolue, encore plus préférentiellement d'au maximum 2°C en valeur absolue, voire en particulier d'au maximum 1°C en valeur absolue.

De préférence, à l'étape iii), la vitesse d'introduction de l'acide fluorhydrique contenu dans ledit courant **A1** dans ledit au moins un dispositif de mélange est d'au moins 1 mole d'HF / mole de bis(halosulfonyle) imide / heure, avantageusement d'au moins 5 moles d'HF / mole de bis(halosulfonyle) imide / heure, de préférence d'au moins 10 moles d'HF / mole de bis(halosulfonyle) imide / heure, plus préférentiellement d'au moins 20 moles d'HF / mole de bis(halosulfonyle) imide / heure, en particulier d'au moins 30 moles d'HF / mole de bis(halosulfonyle) imide / heure, plus particulièrement d'au moins 40 moles d'HF / mole de bis(halosulfonyle) imide / heure, de manière privilégiée d'au moins 50 moles d'HF / mole de bis(halosulfonyle) imide / heure.

En particulier, à l'étape iii), la vitesse d'introduction de l'acide fluorhydrique contenu dans ledit courant **A1** dans ledit au moins un dispositif de mélange est d'au plus 300 moles d'HF / mole de bis(halosulfonyle) imide / heure, avantageusement d'au plus 250 moles d'HF / mole de bis(halosulfonyle) imide / heure, de préférence d'au plus 200 moles d'HF / mole de bis(halosulfonyle) imide / heure, en particulier d'au plus 150 moles d'HF / mole de bis(halosulfonyle) imide / heure, plus particulièrement d'au plus 125 moles d'HF / mole de bis(halosulfonyle) imide / heure, de manière privilégiée d'au plus 100 moles d'HF / mole de bis(halosulfonyle) imide / heure.

Ainsi, à l'étape iii), la vitesse d'introduction de l'acide fluorhydrique contenu dans ledit courant **A1** dans ledit au moins un dispositif de mélange est d'au moins 1 mole d'HF / mole de bis(halosulfonyle) imide / heure, avantageusement d'au moins 5 moles d'HF / mole de bis(halosulfonyle) imide / heure, de préférence d'au moins 10 moles d'HF / mole de bis(halosulfonyle) imide / heure, plus préférentiellement d'au moins 20 moles d'HF / mole de bis(halosulfonyle) imide / heure, en particulier d'au moins 30 moles d'HF / mole de bis(halosulfonyle) imide / heure , plus particulièrement d'au moins 40 moles d'HF / mole de bis(halosulfonyle) imide / heure, de manière privilégiée d'au moins 50 moles d'HF / mole de bis(halosulfonyle) imide / heure ; et d'au plus 300 moles d'HF / mole de bis(halosulfonyle) imide / heure, avantageusement d'au plus 250 moles d'HF / mole de bis(halosulfonyle) imide / heure, de préférence d'au plus 200 moles d'HF / mole de bis(halosulfonyle) imide / heure, en particulier d'au plus 150 moles d'HF / mole de bis(halosulfonyle) imide / heure, plus particulièrement d'au plus 125 moles d'HF / mole de bis(halosulfonyle) imide / heure, de manière privilégiée d'au plus 100 moles d'HF / mole de bis(halosulfonyle) imide / heure.

En particulier, à l'étape iii), la vitesse d'introduction de l'acide fluorhydrique contenu dans ledit courant **A1** dans ledit au moins un dispositif de mélange est d'au moins 1 mole d'HF / mole de bis(chlorosulfonyle) imide / heure, avantageusement d'au moins 5 moles d'HF / mole de bis(chlorosulfonyle) imide / heure, de préférence d'au moins 10 moles d'HF / mole de bis(chlorosulfonyle) imide / heure, plus préférentiellement d'au moins 20 moles d'HF / mole de bis(chlorosulfonyle) imide / heure, en particulier d'au moins 30 moles d'HF / mole de bis(chlorosulfonyle) imide / heure, plus particulièrement d'au moins 40 moles d'HF / mole de bis(chlorosulfonyle) imide / heure, de manière privilégiée d'au moins 50 moles d'HF / mole de bis(chlorosulfonyle) imide / heure.

Plus particulièrement, à l'étape iii), la vitesse d'introduction de l'acide fluorhydrique contenu dans ledit courant **A1** dans ledit au moins un dispositif de mélange est d'au plus 300 moles d'HF / mole de bis(chlorosulfonyle) imide / heure, avantageusement d'au plus 250 moles d'HF / mole de bis(chlorosulfonyle) imide / heure, de préférence d'au plus 200 moles d'HF / mole de bis(chlorosulfonyle) imide / heure, en particulier d'au plus 150 moles d'HF / mole de bis(chlorosulfonyle) imide / heure , plus particulièrement d'au plus 125 moles d'HF / mole de bis(chlorosulfonyle) imide / heure, de manière privilégiée d'au plus 100 moles d'HF / mole de bis(chlorosulfonyle) imide / heure.

Ainsi, à l'étape iii), la vitesse d'introduction de l'acide fluorhydrique contenu dans ledit courant **A1** dans ledit au moins un dispositif de mélange est d'au moins 1 mole d'HF / mole de bis(chlorosulfonyle) imide / heure, avantageusement d'au moins 5 moles d'HF / mole de bis(chlorosulfonyle) imide / heure, de préférence d'au moins 10 moles d'HF / mole de bis(chlorosulfonyle) imide / heure, plus préférentiellement d'au moins 20 moles d'HF / mole de bis(chlorosulfonyle) imide / heure, en particulier d'au moins 30 moles d'HF / mole de bis(chlorosulfonyle) imide / heure, plus particulièrement d'au moins 40 moles d'HF / mole de bis(chlorosulfonyle) imide / heure, de manière privilégiée d'au moins 50 moles d'HF / mole de bis(chlorosulfonyle) imide / heure ; et d'au plus 300 moles d'HF / mole de bis(chlorosulfonyle) imide / heure, avantageusement d'au plus 250 moles d'HF / mole de bis(chlorosulfonyle) imide / heure, de préférence d'au plus 200 moles d'HF / mole de bis(chlorosulfonyle) imide / heure, en particulier d'au plus 150 moles d'HF / mole de bis(chlorosulfonyle) imide / heure , plus particulièrement d'au plus 125 moles d'HF / mole de bis(chlorosulfonyle) imide / heure, de manière privilégiée d'au plus 100 moles d'HF / mole de bis(chlorosulfonyle) imide / heure.

La vitesse d'introduction de l'acide fluorhydrique mentionnée ci-dessus permet d'éviter des pertes d'HF notamment lorsque celui-ci est introduit sous forme gazeuse. Ceci permet donc d'améliorer l'efficacité globale du procédé.

En outre, la vitesse d'introduction de l'HF peut être contrôlée de sorte à maintenir une concentration stationnaire faible en HF dans le milieu réactionnel, c'est-à-dire dans ladite phase liquide A2. L'HF sera alors consommé de suite dans la réaction de fluoration et le ratio molaire entre l'HF et le bis(halosulfonyle) imide sera proche de la stœchiométrie.

Ainsi, selon un mode de réalisation préféré, l'étape iii) est mise en œuvre avec un ratio molaire HF/[bis(halosulfonyle) imide] d'au moins 2,0, de préférence d'au moins 2,05, en particulier d'au moins 2,1. De préférence, l'étape iii) est mise en œuvre avec un ratio molaire HF/[bis(halosulfonyle) imide] d'au plus 3,5, de préférence d'au plus 3,0, en particulier d'au plus 2,5.

Ainsi, l'étape iii) est mise en œuvre avec un ratio molaire HF/[bis(halosulfonyle) imide] d'au moins 2,0, de préférence d'au moins 2,05, en particulier d'au moins 2,1 ; et d'au plus 3,5, de préférence d'au plus 3,0, en particulier d'au plus 2,5.

De préférence, l'étape iii) est mise en œuvre avec un ratio molaire HF/[bis(chlorosulfonyle) imide] d'au moins 2,0, de préférence d'au moins 2,05, en particulier d'au moins 2,1. De préférence, l'étape iii) est mise en œuvre avec un ratio molaire HF/[bis(chlorosulfonyle) imide] d'au plus 3,5, de préférence d'au plus 3,0, en particulier d'au plus 2,5.

Ainsi, l'étape iii) est mise en œuvre avec un ratio molaire HF/[bis(chlorosulfonyle) imide] d'au moins 2,0, de préférence d'au moins 2,05, en particulier d'au moins 2,1 ; et d'au plus 3,5, de préférence d'au plus 3,0, en particulier d'au plus 2,5.

Selon un mode de réalisation préféré, ledit procédé comprend l'étape v) de répétition des étapes ii) à iv) jusqu'à l'obtention d'une phase liquide **A2** comprenant au moins 95% en poids de bis(fluorosulfonyle) imide. Comme précisé dans la présente demande, au cours de l'étape iii) l'acide fluorhydrique va réagir avec le bis(halosulfonyle) imide pour former du bis(fluorosulfonyle) imide. Ainsi, au cours de la mise en œuvre du procédé, ladite phase liquide **A2** va se concentrer en bis(fluorosulfonyle) imide. La teneur massique en bis(fluorosulfonyle) imide dans ladite phase liquide **A2** va augmenter progressivement et la teneur massique en bis(halosulfonyle) imide dans ladite phase liquide **A2** va a contrario diminuer progressivement. Avantageusement, les étapes ii) à iv) sont répétées jusqu'à l'obtention d'une phase liquide **A2** comprenant au moins 95% en poids de bis(fluorosulfonyle) imide, de préférence au moins 96% en poids de bis(fluorosulfonyle) imide, plus préférentiellement au moins 97% en poids de bis(fluorosulfonyle) imide, en particulier au moins 98% en poids de bis(fluorosulfonyle) imide, plus particulièrement au moins 99% en poids de bis(fluorosulfonyle) imide, de manière privilégiée au moins 99,5% en poids de bis(fluorosulfonyle) imide.

Selon la présente invention, l'acide fluorhydrique, contenu dans le courant **A1,** et le bis(halosulfonyle) imide, contenu dans la phase liquide **A2,** sont mélangés et mis en contact à l'extérieur dudit réacteur. Le mélange et la mise en contact de l'acide fluorhydrique et du bis(halosulfonyle) imide avant leur introduction dans le réacteur permet de maximiser leur contact et ainsi de faciliter la réaction entre eux.

Ledit courant **A1** peut être sous forme gazeuse ou liquide. Ainsi, l'acide fluorhydrique contenu dans ce courant **A1** peut être sous forme gazeuse ou liquide. De préférence, lorsque l'acide fluorhydrique est sous forme gazeuse, ledit courant **A1** est sous forme gazeuse. Dans cette configuration, ledit courant **A1** pourrait contenir également un gaz inerte, tel que l'azote ou l'argon. Alternativement, lorsque l'acide fluorhydrique est sous forme liquide, ledit courant **A1** est sous forme liquide.

De préférence, ledit courant **A1** a une conductivité électrique inférieure à 30 mS/cm à température ambiante, avantageusement inférieure à 25 mS/cm, de préférence inférieure à 20 mS/cm, plus préférentiellement inférieure à 15 mS/cm. La mise en œuvre du procédé avec un courant **A1** ayant une conductivité électrique supérieure à 30 mS/cm conduit à une perte de rendement global de la réaction, tant sur la conversion du bis(halosulfonyle) imide que sur la sélectivité envers le bis(fluorosulfonyle) imide. La mesure de la conductivité électrique est effectuée sur base d'un courant **A1** sous forme liquide. La conductivité électrique est mesurée à l'aide d'une cellule de mesure de conductivité inductive et selon la pratique connue de l'homme du métier. La conductivité électrique du courant **A1** peut être diminuée pour atteindre les valeurs mentionnées ci-dessus selon les techniques connues de l'homme du métier (distillation, passage sur des tamis moléculaires de 3 à 5 A ou des zéolites). De préférence, la cellule de mesure est revêtue d'un matériau résistant à un milieu corrosif, en particulier résistant à l'acide fluorhydrique. La mesure de la conductivité du courant **A1** est effectuée avant l'introduction de celui-ci dans ledit dispositif de mélange.

Ledit courant **A1** peut être vaporisé, à l'aide d'un échangeur de chaleur, pour être mis sous forme gazeuse avant son introduction dans ledit dispositif de mélange.

De préférence, ladite phase liquide **A2** ou ledit courant **A1** lorsque celui-ci est sous forme liquide est introduit dans ledit au moins un dispositif de mélange sous la forme de gouttelettes. La taille des gouttelettes peut varier en fonction du dispositif de mélange. Néanmoins, ladite phase liquide **A2** est introduite ledit dispositif de mélange sous la forme de gouttelettes dont le diamètre est compris entre 10 et 500 µm. Au-delà de 500 µm, la réaction entre ledit courant **A1** et ladite phase liquide **A2** sont défavorisées.

Selon un mode de réalisation particulier, ledit courant **A1** est sous forme gazeuse. Dans ce cas, ledit au moins un dispositif de mélange est de préférence un hydrolaveur. Le terme « hydrolaveur » peut également être dénommé laveur à jet de gaz, hydro-éjecteur ou laveur de gaz à effet venturi. Ledit hydrolaveur comprend une chambre et une jambe connectée l'une avec l'autre. Ledit courant **A1** contenant l'acide fluorhydrique sous gazeuse est introduit dans ladite chambre de l'hydrolaveur. Ladite phase liquide **A2** comprenant le bis(halosulfonyle) imide est également introduit dans ladite chambre de l'hydrolaveur. Ladite phase liquide **A2** reste sous forme liquide lors de son introduction dans ladite chambre de l'hydrolaveur et lors de son séjour au sein de celle-ci. En particulier, dans ce mode de configuration, ledit courant **A1** et ladite phase liquide **A2** sont donc mélangés et mis en contact au sein de ladite chambre de l'hydrolaveur. Le contact entre l'acide fluorhydrique et le bis(halosulfonyle) imide s'effectue dans ladite chambre de l'hydrolaveur. De préférence, ladite phase liquide **A2** est introduite dans ladite chambre de l'hydrolaveur sous la forme de gouttelettes. Ceci peut être effectué à l'aide d'une pluralité de buses. La taille des gouttelettes peut varier en fonction de la taille de l'hydrolaveur et/ou de la chambre de l'hydrolaveur. Le type de buses dépend de la taille des gouttelettes à générer. Il est de pratique courante pour l'homme du métier de choisir le type de buses à utiliser pour atteindre une taille donnée de gouttelettes. Ladite phase liquide **A2** est introduite dans l'hydrolaveur, i.e. dans ladite chambre de l'hydrolaveur, sous la forme de gouttelettes dont le diamètre est compris entre 10 et 500 µm. Au-delà de 500 µm, la réaction entre ledit courant **A1** et ladite phase liquide **A2** est défavorisée.

Le mélange et la mise en contact du courant **A1** et de la phase liquide **A2** génère un mélange biphasique gazeux/liquide qui alimente ladite jambe de l'hydrolaveur. Ledit mélange biphasique gazeux/liquide correspond audit mélange réactionnel **B.** Ladite jambe de l'hydrolaveur permet de stocker ledit mélange réactionnel **B** avant son introduction dans le réacteur. Ainsi, la jambe de l'hydrolaveur est directement connectée avec l'entrée dudit réacteur.

Selon un autre mode de réalisation préféré, ledit au moins un dispositif de mélange est un mélangeur statique. Dans ce mode de réalisation, ledit courant **A1** est sous forme liquide ou gazeuse mais de préférence ledit courant **A1** est sous forme liquide. La mise en œuvre du courant **A1** sous forme liquide permet d'éviter une étape coûteuse de vaporisation de celui-ci. De préférence, dans le mélangeur statique, la phase liquide **A2** et le courant **A1,** tous deux sous forme liquide, sont finement mélangés ce qui permet de maximiser le contact entre l'acide fluorhydrique contenu dans le courant **A1** et le bis(halosulfonyle) imide contenu dans la phase liquide **A2** et ainsi de faciliter la réaction entre les deux composés. La réaction entre ces deux composés est initiée à l'intérieur du mélangeur statique. Ainsi, en sortie du mélangeur statique, le mélange obtenu est le mélange réactionnel **B** tel que décrit dans la présente demande. Le mélange réactionnel **B** formé est ainsi renvoyé vers ledit réacteur.

De préférence, ledit courant **A1** sous forme liquide est introduit dans le mélangeur statique sous la forme de gouttelettes. Ceci peut être effectué à l'aide d'une pluralité de buses. La taille des gouttelettes peut varier en fonction de la taille du mélangeur statique. Le type de buses dépend de la taille des gouttelettes à générer. Il est de pratique courante pour l'homme du métier de choisir le type de buses à utiliser pour atteindre une taille donnée de gouttelettes. Ainsi, de préférence, ledit courant **A1** est introduit dans le mélangeur statique sous la forme de gouttelettes dont le diamètre est compris entre 10 et 500 µm. Au-delà de 500 µm, la réaction entre ledit courant **A1** et ladite phase liquide **A2** est défavorisée.

Dans ce mode de réalisation, ledit au moins un dispositif de mélange peut comprendre une pluralité de mélangeurs statiques, par exemple deux ou plus mélangeurs statiques. Lorsque le dispositif de mélange comprend une pluralité de mélangeurs statiques, ceux-ci sont disposés en série. De préférence, dans ce cas, ledit courant **A1** alimente chacun des mélangeurs statiques tandis que la phase liquide **A2** alimente le premier mélangeur statique. Le mélange réactionnel **B** formé dans le premier mélangeur statique alimente alors le second mélangeur statique disposé en série par rapport au premier mélangeur statique. Le mélange réactionnel **B** formé dans chaque mélangeur statique alimente le suivant jusqu'au dernier mélangeur statique qui est, lui, connecté audit réacteur.

Selon un mode de réalisation préféré, au cours de l'étape iii), un composé de formule HX est produit, X étant CI, Br ou I et le mélange réactionnel **B** comprend, outre bis(fluorosulfonyle) imide, ledit composé HX. Le composé HX est HCl lorsque le bis(halosulfonyle) imide est le bis(chlorosulfonyle) imide. Le composé HX est HBr lorsque le bis(halosulfonyle) imide est le bis(bromosulfonyle) imide. Le composé HX est HI lorsque le bis(halosulfonyle) imide est le bis(iodosulfonyle) imide.

Ainsi, le mélange réactionnel **B** introduit dans ledit réacteur comprend HX, du bis(halosulfonyle) imide n'ayant pas réagi, du bis(fluorosulfonyle) imide et éventuellement du HF. Une fois réintroduit dans ledit réacteur, le mélange réactionnel **B** est mélangé avec ladite phase liquide **A2.** Si le mélange réactionnel **B** comprend du HF non réagi, ladite phase liquide **A2** contiendra également de l'HF qui pourra réagir dans le réacteur avec le bis(halosulfonyle) imide également présent dans la phase liquide **A2.** Ainsi, la phase liquide **A2** peut avoir une teneur massique en HF inférieure à 10%, avantageusement inférieure à 9%, de préférence inférieure à 8%, plus préférentiellement inférieure à 7%, en particulier inférieure à 6%, plus particulièrement inférieure à 5%, de manière privilégiée inférieure à 4%, de manière avantageusement privilégiée inférieure à 3%, de manière préférentiellement privilégiée inférieure à 2%, de manière particulièrement privilégiée inférieure à 1% sur base du poids total de la phase liquide **A2.**

Selon un mode de réalisation préféré, ledit procédé comprend une étape iv'') postérieure à l'étape iv) au cours de laquelle le composé de formule HX est éliminé dudit réacteur. L'élimination du composé HX peut être mise en œuvre en continu. Le composé HX est sous forme gazeuse tandis que les composés bis(fluorosulfonyle) imide et bis(halosulfonyle) imide sont sous forme liquide. Le composé HX se trouve ainsi sous forme gazeuse dans le ciel dudit réacteur et peut ainsi être facilement séparé des autres produits de la réaction.

Selon un autre aspect de la présente invention, une installation est fournie. Ladite installation permet de mettre en œuvre ledit procédé de préparation bis(fluorosulfonyle) imide selon la présente invention. De préférence, ladite installation comprend :
- un réacteur contenant une phase liquide **A2** comprenant du bis(halosulfonyle) imide ;
- une ligne d'amenée de ladite phase liquide **A2** connectée audit réacteur.
- au moins un dispositif de mélange connecté à l'entrée dudit réacteur ;
- une ligne d'amenée de l'acide fluorhydrique connectée à l'entrée dudit dispositif de mélange ;
- une pompe connectée à la sortie dudit réacteur ;
- une ligne de sortie configurée pour extraire les gaz contenus dans le ciel dudit réacteur ; et
- une conduite reliant ladite pompe audit dispositif de mélange ; et
- optionnellement un échangeur thermique disposé sur ladite conduite et connecté audit dispositif de mélange et à ladite pompe.

De préférence, la conduite relie ladite pompe à l'entrée dudit dispositif de mélange. De préférence, la sortie dudit au moins un dispositif de mélange est connectée à l'entrée dudit réacteur, en particulier par l'intermédiaire d'une seconde conduite.

De préférence, la ligne d'amenée du courant **A1** et ladite conduite reliant ladite pompe audit dispositif de mélange sont configurées de sorte à permettre l'alimentation dudit dispositif de mélange à co-courant.

Ledit réacteur peut présenter une double enveloppe pour améliorer les échanges thermiques. Ladite installation peut également comprendre une ligne de sortie pour récupérer le bis(fluorosulfonyle) imide. De préférence, cette ligne de sortie est disposée entre la pompe et ledit dispositif de mélange ou entre la pompe et l'échangeur thermique si l'installation comprend un échangeur thermique.

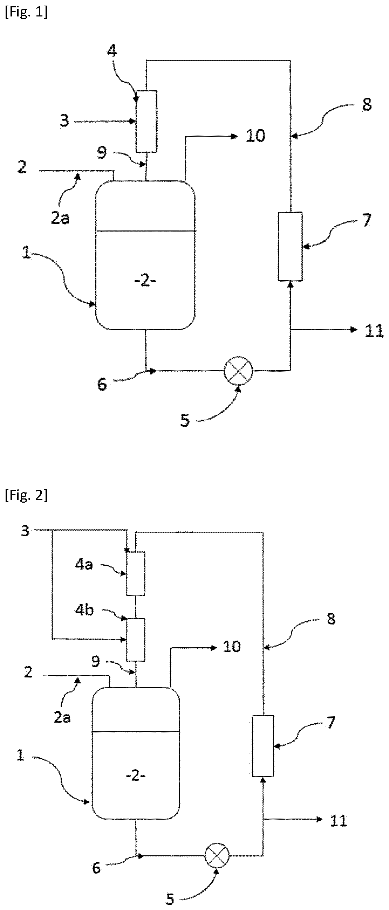

La Fig. 1 illustre un mode de réalisation particulier d'une installation pour la mise en œuvre du procédé de préparation décrit ci-dessus. Le réacteur 1 contient une phase liquide 2 comprenant le bis(chlorosulfonyle) imide. La phase liquide 2 est introduite par la conduite 2a dans ledit réacteur 1. Cette introduction est préalable à la mise en œuvre de la réaction de fluoration. La phase liquide 2 est soutirée du réacteur 1 par une pompe 5 connectée audit réacteur par l'intermédiaire d'une conduite 6. La phase liquide 2 alimente un échangeur de chaleur 7 configuré pour maintenir constante la température de celle-ci. Une conduite 8 connecte l'échangeur de chaleur 7 au dispositif de mélange 4. La phase liquide 2 alimente ledit dispositif de mélange 4 par l'intermédiaire de ladite conduite 8. Ledit dispositif de mélange 4 est également alimenté par de l'acide fluorhydrique 3 sous forme gazeuse ou liquide. Une conduite 9 permet de connecter la sortie du dispositif de mélange 4 avec l'entrée du réacteur 1. Ledit dispositif de mélange 4 peut être un hydrolaveur ou un mélangeur statique comme ceci est décrit dans la présente demande. La Fig. 2 illustre un autre mode de réalisation particulier d'une installation pour la mise en œuvre du procédé de préparation décrit ci-dessus. Dans ce mode de réalisation illustré à la Fig. 2, l'installation comprend deux dispositifs de mélange 4a, 4b disposés en série. Cette configuration est particulièrement avantageuse lorsque le dispositif de mélange est un mélangeur statique. Chaque dispositif de mélange 4a,4b est alimenté par l'acide fluorhydrique 3. Le flux sortant du dispositif de mélange 4a est introduit dans le dispositif de mélange 4b. Le flux sortant du dispositif de mélange 4b alimente le réacteur 1 par l'intermédiaire de la conduite 9.

Dans ces deux modes de réalisation illustrés à la Fig. 1 et à la Fig. 2, le réacteur 1 comprend également une ligne de sortie 10 pour éliminer les gaz contenus dans le ciel du réacteur, en particulier pour éliminer le HCl coproduit pendant la réaction de fluoration lorsque le bis(halosulfonyle) imide est le bis(chlorosulfonyle) imide. Lorsque le procédé est terminé, par exemple lorsque la conversion du bis(halosulfonyle) imide est suffisante ou totale, la phase liquide 2 est soutirée du réacteur 1 par l'intermédiaire de la conduite 6 et de la pompe 5 comme précédemment. Néanmoins, la phase liquide 2 est acheminée vers une ligne de sortie 11 pour récupérer cette phase liquide enrichie en bis(fluorosulfonyle) imide. Cette dernière peut être purifiée ou utilisée dans un autre procédé sans traitement supplémentaire. La mise en œuvre du présent procédé en mode discontinu est illustrée à la figure 1 et à la figure 2.

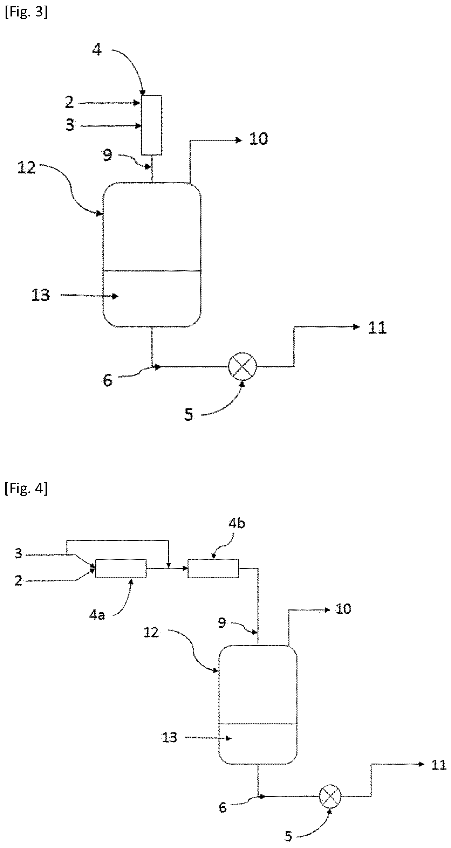

Selon un autre aspect de la présente invention, un procédé de préparation alternatif du bis(fluorosulfonyle) imide est fourni. Dans cet autre aspect de l'invention, ledit procédé est de préférence mis en œuvre en continu, c'est-à-dire que le bis(fluorosulfonyle) imide est récupéré en continu. Ce mode de réalisation est illustré à la figure 3 et à la figure 4.

Selon un mode de réalisation particulier alternatif, ladite phase liquide **A2** comprend du bis(halosulfonyle) imide et un solvant organique. Le solvant organique SO1 peut être choisi parmi les esters, les nitriles, les éthers, les solvants aromatiques, les carbonates, les solvants cycliques ou hétérocycliques et leurs mélanges. De préférence, le solvant organique SO1 est choisi dans le groupe constitué de l'acétate de méthyle, l'acétate de butyle, de l'acétate d'éthyle, de l'acétate de propyle, de l'acétate d'isopropyle, du butyronitrile, du valéronitrile, du benzonitrile, du diisopropyl éther, du 2-méthoxy-2-méthylbutane, du cyclopentylméthyl éther, du benzène, du toluène, du chlorobenzène, du dichlorobenzène, des xylènes, de l'éthylbenzène, 1,4-dioxane, du carbonate de diméthyle, du carbonate d'éthylène, du sulfolane et de leurs mélanges.

L'acide fluorhydrique contenu dans ledit courant **A1** réagit avec le bis(halosulfonyle) imide contenu dans ladite phase liquide **A2** pour former le bis(fluorosulfonyle) imide. Le bis(halosulfonyle) imide peut être le bis(chlorosulfonyle) imide, le bis(bromosulfonyle) imide ou le bis(iodosulfonyle) imide ou un mélange de ceux-ci. De préférence, dans la présente demande, le bis(halosulfonyle) imide est le bis(chlorosulfonyle) imide.

De préférence, l'acide fluorhydrique est de l'acide fluorhydrique anhydre. Dans le cadre de l'invention, par « acide fluorhydrique anhydre », on entend de l'HF contenant moins de 500 ppm d'eau, de préférence moins de 300 ppm d'eau de manière préférée moins de 200 ppm d'eau.

De préférence, l'étape iii) est mise en œuvre dans des conditions de pression et de température de sorte à maintenir le bis(halosulfonyle) imide et le bis(fluorosulfonyle) imide produit sous forme liquide.

De préférence, ledit courant **A1** a une conductivité électrique inférieure à 30 mS/cm à température ambiante, avantageusement inférieure à 25 mS/cm, de préférence inférieure à 20 mS/cm, plus préférentiellement inférieure à 15 mS/cm. La mise en œuvre du procédé avec un courant **A1** ayant une conductivité électrique supérieure à 30 mS/cm conduit à une perte de rendement global de la réaction, tant sur la conversion du bis(halosulfonyle) imide que sur la sélectivité envers le bis(fluorosulfonyle) imide. La mesure de la conductivité électrique est effectuée sur base d'un courant **A1** sous forme liquide. La conductivité électrique est mesurée à l'aide d'une cellule de mesure de conductivité inductive et selon la pratique connue de l'homme du métier. La conductivité électrique du courant **A1** peut être diminuée pour atteindre les valeurs mentionnées ci-dessus selon les techniques connues de l'homme du métier (distillation, passage sur des tamis moléculaires de 3 à 5 A ou des zéolites). De préférence, la cellule de mesure est revêtue d'un matériau résistant à un milieu corrosif, en particulier résistant à l'acide fluorhydrique. La mesure de la conductivité du courant **A1** est effectuée avant l'introduction de celui-ci dans ledit dispositif de mélange.

De préférence, ledit courant **A1** est sous forme liquide et ledit au moins un dispositif de mélange est un mélangeur statique. De préférence, dans le mélangeur statique, la phase liquide **A2** et le courant A1, tous deux sous forme liquide, sont finement mélangés ce qui permet de maximiser le contact entre l'acide fluorhydrique contenu dans le courant **A1** et le bis(halosulfonyle) imide contenu dans la phase liquide **A2** et ainsi de faciliter la réaction entre les deux composés. La réaction entre ces deux composés est initiée et achevée à l'intérieur du mélangeur statique. Ainsi, en sortie du mélangeur statique, le mélange obtenu est le mélange réactionnel **C.**

De préférence, ledit courant **A1** sous forme liquide est introduit dans le mélangeur statique sous la forme de gouttelettes. Ceci peut être effectué à l'aide d'une pluralité de buses. La taille des gouttelettes peut varier en fonction de la taille du mélangeur statique. Le type de buses dépend de la taille des gouttelettes à générer. Il est de pratique courante pour l'homme du métier de choisir le type de buses à utiliser pour atteindre une taille donnée de gouttelettes. Ainsi, de préférence, ledit courant **A1** est introduit dans le mélangeur statique sous la forme de gouttelettes dont le diamètre est compris entre 10 et 500 µm. Au-delà de 500 µm, la réaction entre ledit courant **A1** et ladite phase liquide **A2** est défavorisée.

Dans cet aspect de la présente invention, une installation pour la mise en œuvre du procédé est fournie. De préférence, ladite installation comprend :
- un séparateur et au moins un dispositif de mélange, la sortie dudit dispositif de mélange étant connecté à l'entrée dudit séparateur ;
- une ligne d'amenée d'une phase liquide **A2** comprenant du bis(halosulfonyle) imide connectée à l'entrée dudit dispositif de mélange.
- une ligne d'amenée d'un courant **A1** comprenant de l'acide fluorhydrique et connectée à l'entrée dudit dispositif de mélange ;
- une pompe connectée à la sortie dudit séparateur ;
- une ligne de sortie configurée pour extraire les gaz contenus dans le ciel dudit séparateur ; et
- une ligne de sortie connectée à ladite pompe.

De préférence, ladite ligne de sortie connectée à ladite pompe est configurée pour soutirer en continu le bis(fluorosulfonyle) imide. De préférence, ledit au moins un dispositif de mélange est équipé d'une double enveloppe.

De préférence la ligne d'amenée de la phase liquide **A2** et la ligne d'amenée du courant **A1** sont configurées de sorte à permettre l'alimentation dudit dispositif de mélange à co-courant.

La Fig. 3 illustre un mode de réalisation particulier d'une installation pour la mise en œuvre en continu du procédé de préparation décrit ci-dessus. La phase liquide 2 comprenant le bis(chlorosulfonyle) imide et l'acide fluorhydrique 3 alimentent en continu le dispositif de mélange 4. Le mélange obtenu dans le dispositif de mélange 4, i.e. le mélange réactionnel C selon la présente demande, est introduit dans le séparateur 12 par la conduite 9. Ledit séparateur 12 est connecté à une pompe 5 par l'intermédiaire d'une conduite 6. La pompe 5 permet de soutirer en continu la phase liquide 13 contenue dans le séparateur 12. La phase liquide 13 comprend le bis(fluorosulfonyle) imide. Le séparateur 12 comprend également une ligne de sortie 10 pour éliminer les gaz contenus dans le ciel du réacteur, i.e. le HCl coproduit au cours de la réaction. Une ligne de sortie 11 connectée à la pompe 5 permet de récupérer le bis(fluorosulfonyle)) imide.

La Fig. 4 illustre un mode de réalisation particulier d'une installation pour la mise en œuvre en continu du procédé de préparation décrit ci-dessus dans laquelle deux dispositifs de mélange 4a, 4b sont disposés en série. Cette configuration est particulièrement avantageuse lorsque le dispositif de mélange est un mélangeur statique. L'acide fluorhydrique alimente directement chacun des dispositifs de mélange 4a et 4b. La phase liquide 2 comprenant le bis(chlorosulfonyle) imide alimente le premier dispositif de mélange en continu. Le flux sortant du second dispositif de mélange 4b alimente le séparateur 12.

Selon un autre aspect, la présente invention fournit un procédé de préparation de sel de lithium de bis(fluorosulfonyle) imide comprenant les étapes :
a) mise en œuvre du procédé de préparation du bis(fluorosulfonyle) imide selon la présente invention ;
b) mise en contact du bis(fluorosulfonyle) imide avec une composition comprenant au moins un sel de lithium pour former ledit sel de lithium de bis(fluorosulfonyle) imide.

Le présent procédé de préparation de sel de lithium de bis(fluorosulfonyle) imide est mis en œuvre quel que soit le procédé de préparation de bis(fluorosulfonyle) imide mis en œuvre, i.e. continu ou discontinu.

Selon un mode de réalisation préféré, la composition comprenant au moins un sel de lithium est une composition aqueuse, de préférence une suspension aqueuse ou une solution aqueuse. Selon un autre mode de réalisation préféré, la composition comprenant au moins un sel de lithium est une composition solide, de préférence la composition est constituée d'au moins un sel de lithium solide.

En particulier, le bis(fluorosulfonyle) imide est ajouté dans un récipient comprenant la composition comprenant au moins un sel de lithium. Le récipient peut être un réacteur, de préférence comprenant au moins un système d'agitation. Les éléments permettant d'introduire la composition obtenue à l'étape b) sont de préférence résistants à l'HF.

Selon un mode de réalisation, le sel de lithium est choisi dans le groupe constitué de LiOH, LiOH,H₂O, LiHCO₃, Li₂CO₃, LiCl, et de leurs mélanges. De préférence, le sel de lithium est Li₂CO₃. La composition, lorsqu'il s'agit d'une composition aqueuse comprenant au moins un sel de lithium, peut être préparée par tout moyen conventionnel de préparation de composition aqueuse alcaline. Il peut par exemple s'agir de la dissolution du sel de lithium dans de l'eau ultrapure ou désionisée, sous agitation.

Pour déterminer la quantité de sel de lithium à introduire, on peut typiquement procéder à une analyse de l'acidité totale du mélange à neutraliser.

Selon un mode de réalisation, l'étape b) est telle que :
- le rapport molaire du sel de lithium divisé par le nombre de basicités dudit sel par rapport au bis(fluorosulfonyle) imide est supérieur ou égal à 1, de préférence inférieur à 5, de préférence inférieur à 3, de façon préférentielle comprise entre 1 et 2 ; et/ou
- le rapport massique du sel de lithium sur la masse d'eau dans la composition aqueuse est comprise entre 0,1 et 2, de préférence entre 0,2 et 1 de manière préférée entre 0,3 et 0,7.

Par exemple, le sel Li₂CO₃ présente un nombre de basicités égal à 2.

L'étape b) du procédé selon l'invention peut être réalisée à une température inférieure ou égale à 40°C, de préférence inférieure ou égale à 30°C, préférentiellement inférieure ou égale à 20°C, et en particulier inférieure ou égale à 15°C.

Selon un mode de réalisation, le procédé selon l'invention comprend une étape supplémentaire de filtration de la composition obtenue à l'étape b), conduisant à un filtrat F et à un gâteau G. Le sel de lithium de bis(fluorosulfonyle) imide peut être contenu dans le filtrat F et/ou dans le gâteau **G.** Le filtrat **F** peut être soumis à au moins une étape d'extraction avec un solvant organique **S** typiquement faiblement soluble dans l'eau, afin d'extraire le sel de lithium de bis(fluorosulfonyle) imide dans une phase organique. L'étape d'extraction conduit typiquement à la séparation d'une phase aqueuse et d'une phase organique. Dans le cadre de l'invention, et sauf mention contraire, par « faiblement soluble dans l'eau », on entend un solvant dont la solubilité dans l'eau est inférieure à 5% en poids. Le solvant organique **S** susmentionné est en particulier choisi parmi les familles suivantes: les esters, les nitriles, les éthers, les solvants chlorés, les solvants aromatiques, et leurs mélanges. De préférence, le solvant organique **S** est choisi parmi le dichlorométhane, l'acétate d'éthyle, l'acétate de butyle, le tétrahydrofurane, le diéthyléther, et leurs mélanges. En particulier, le solvant organique **S** est l'acétate de butyle. Pour chaque extraction, la quantité massique de solvant organique utilisée peut varier entre 1/6 et 1 fois la masse du filtrat **F.** Le nombre d'extractions peut être compris entre 2 et 10. De préférence, la phase organique, résultant de(s) l'extraction(s), présente une teneur massique en sel de lithium de bis(fluorosulfonyle) imide allant de 5% à 40% en masse. La phase organique séparée (obtenue à l'issue de l'extraction) peut ensuite être concentrée pour atteindre une concentration en sel de lithium de bis(fluorosulfonyle) imide comprise entre 30% et 60%, de préférence entre 40% et 50% en masse, ladite concentration pouvant être réalisée par tout moyen d'évaporation connu de l'homme du métier.

Le gâteau **G** susmentionné peut être lavé avec un solvant organique **S'** choisi parmi les familles suivantes : les esters, les nitriles, les éthers, les solvants chlorés, les solvants aromatiques, et leurs mélanges. De préférence, le solvant organique **S'** est choisi parmi le dichlorométhane, l'acétate d'éthyle, l'acétate de butyle, le tétrahydrofurane, l'acétronitrile, le diéthyléther, et leurs mélanges. En particulier, le solvant organique **S' est** l'acétate de butyle. La quantité massique de solvant organique **S'** utilisée peut varier entre 1 et 10 fois le poids du gâteau. La quantité totale de solvant organique **S'** destinée au lavage peut être utilisée en une seule fois ou en plusieurs fois dans le but notamment d'optimiser la dissolution du sel de lithium de bis(fluorosulfonyle) imide. De préférence, la phase organique, résultant du(des) lavage(s) du gâteau **G,** présente une teneur massique en sel de lithium de bis(fluorosulfonyle) imide allant de 5% à 20% en masse. La phase organique séparée résultant du(des) lavage(s) du gâteau **G,** peut ensuite être concentrée pour atteindre une concentration en sel de lithium de bis(fluorosulfonyle) imide comprise entre 30% et 60%, de préférence entre 40% et 50% en masse, ladite concentration pouvant être réalisée par tout moyen d'évaporation connu de l'homme du métier. Selon un mode de réalisation, les phases organiques résultant de(s) l'extraction(s) du filtrat **F** et du(des) lavage(s) du gâteau **G,** peuvent être rassemblées ensemble, avant une étape de concentration.

### Exemple

Dans un réacteur non agité de 100 litres, on introduit 65 kg de bis(chlorosulfonyl)imide (HCSI) liquide et 6,5 kg de 1,4-dioxane liquide. Le rapport massique entre le 1,4-dioxane et le HCSI est de 10%. Le milieu comprenant HCSI et 1,4-dioxane est porté à 50°C, préalablement à l'introduction de l'acide fluorhydrique. Un dispositif de pompage permet de soutirer le milieu présent dans le réacteur par le fond de ce dernier et de le ré-introduire dans le réacteur par le haut du réacteur. Cette boucle de pompage fonctionne tout au long de la réaction. La réaction est conduite en régulant la température du milieu réactionnel à 50°C au moyen d'un échangeur installé sur cette boucle de circulation. Cette dernière comprend également un mélangeur statique qui est également alimenté en HF. Ce mélangeur statique permet de mélanger efficacement à co-courant le milieu soutiré du réacteur avec de l'HF avant de retourner ce mélange au réacteur. L'HF est introduit en continu pendant la réaction. La quantité totale d'HF introduite est de 18,0 kg ce qui correspond à un ratio molaire HF par rapport au HCSI de 3,0. Le débit d'introduction de l'HF gazeux est régulé à 6,2 kg/h. La durée de la réaction est de 3 heures. La réaction s'accompagne de la formation d'HCl qui est éliminé en continu du réacteur. Les gaz sortants du réacteur sont dirigés vers un piège à eau. Lorsque tout l'HF a été introduit, un flux d'azote d'un débit de 1 m³/h est introduit dans le réacteur de façon à stripper l'HF et l'HCl pouvant être dissous dans le milieu réactionnel. Ce stripping est opéré pendant 2h et la température du milieu est maintenue à 50°C. les gaz de stripping sortant du réacteur sont également dirigés vers un piège à eau. Après stripping, le réacteur contient 58,3 kg de bis(fluorosulfonyl)imide (HFSI) brut. La composition de ce HFSI brut est analysée par RMN.

| Composition du HFSI brut en % poids | |
|---|---|
| HFSI | 89,78 |
| FSO3H | 1,42 |
| FSO2NH2 | 0,45 |
| HF | 2,23 |
| 1,4-dioxane | 6,12 |

La conversion du HCSI est totale et atteint 100%. Le rendement en HFSI est de 91,2%.

## Revendications

1. Procédé de préparation du bis(fluorosulfonyle) imide comprenant les étapes de :
i) - la fourniture d'un courant **A1** comprenant de l'acide fluorhydrique ;
- la fourniture d'un réacteur contenant une phase liquide **A2** comprenant du bis(halosulfonyle) imide ;
- la fourniture d'au moins un dispositif de mélange connecté à l'entrée dudit réacteur ;
ii) l'alimentation dudit au moins un dispositif de mélange par la phase liquide **A2** et par ledit courant **A1;**
iii) mise en contact, dans ledit dispositif de mélange, de ladite phase liquide **A2** avec ledit courant **A1,** pour former un mélange réactionnel **B** comprenant bis(fluorosulfonyle) imide ;
iv) l'introduction du mélange réactionnel **B** produit à l'étape iii) dans la phase liquide **A2** dudit réacteur.

2. Procédé selon la revendication précédente **caractérisé en ce que** le procédé est mis en œuvre en mode discontinu et la phase liquide **A2** contenue dans ledit réacteur est soutirée, de préférence en continu, pour alimenter ledit au moins un dispositif de mélange à l'étape ii).

3. Procédé selon l'une quelconque des revendications précédentes **caractérisé en ce que**, ledit procédé comprend l'étape v) de répétition des étapes ii) à iv) jusqu'à l'obtention d'une phase liquide **A2** comprenant au moins 95% en poids de bis(fluorosulfonyle) imide.

4. Procédé selon l'une quelconque des revendications précédentes **caractérisé en ce que** l'acide fluorhydrique est sous forme gazeuse et ledit au moins un dispositif de mélange est un hydrolaveur.

5. Procédé selon l'une quelconque des revendications précédentes 1 à 3 **caractérisé en ce que** l'acide fluorhydrique est sous forme liquide et ledit au moins un dispositif de mélange est un mélangeur statique.

## Patentansprüche

1. Verfahren zur Herstellung von Bis(fluorsulfonyl)imid, das die folgenden Schritte umfasst:
i) - die Bereitstellung eines Fluorwasserstoffsäure umfassenden Stroms A1;
- die Bereitstellung eines Reaktors, der eine Bis(halogensulfonyl)imid umfassende flüssige Phase A2 enthält;
- die Bereitstellung mindestens einer mit dem Einlass des Reaktors verbundenen Mischvorrichtung;
ii) die Zufuhr der flüssigen Phase A2 und des Stroms A1 zu der mindestens einen Mischvorrichtung;
iii) das In-Kontakt-Bringen der flüssigen Phase A2 mit dem Strom A1 in der Mischvorrichtung, wodurch ein Bis(fluorsulfonyl)imid umfassendes Reaktionsgemisch B gebildet wird;
iv) das Einführen des in Schritt iii) erzeugten Reaktionsgemisches B in die flüssige Phase A2 des Reaktors.

2. Verfahren nach dem vorhergehenden Anspruch, **dadurch gekennzeichnet, dass** das Verfahren chargenweise durchgeführt wird und die im Reaktor enthaltene flüssige Phase A2 vorzugsweise kontinuierlich abgezogen wird, wodurch die mindestens eine Mischvorrichtung in Schritt ii) gespeist wird.

3. Verfahren nach einem der vorhergehenden Ansprüche, **dadurch gekennzeichnet, dass** das Verfahren Schritt v) der Wiederholung der Schritte ii) bis iv) bis zum Erhalt einer flüssigen Phase A2 umfasst, die mindestens 95 Gew.- % Bis(fluorsulfonyl)imid umfasst.

4. Verfahren nach einem der vorhergehenden Ansprüche, **dadurch gekennzeichnet, dass** die Fluorwasserstoffsäure gasförmig vorliegt und es sich bei der mindestens einen Mischvorrichtung um einen Wasserwäscher handelt.

5. Verfahren nach einem der vorhergehenden Ansprüche 1 bis 3, **dadurch gekennzeichnet, dass** die Fluorwasserstoffsäure in flüssiger Form vorliegt und es sich bei der mindestens einen Mischvorrichtung um einen statischen Mischer handelt.

## Claims

1. Process for preparing bis(fluorosulfonyl)imide comprising the steps of:
i) - providing a stream **A1** comprising hydrofluoric acid;
- providing a reactor containing a liquid phase **A2** comprising bis(halosulfonyl)imide;
- providing at least one mixing device connected to the inlet of said reactor;
ii) supplying said at least one mixing device with the liquid phase **A2** and with said stream **A1;**
iii) bringing, in said mixing device, said liquid phase **A2** into contact with said stream **A1,** in order to form a reaction mixture **B** comprising bis(fluorosulfonyl)imide;
iv) introducing the reaction mixture **B** produced in step iii) into the liquid phase **A2** of said reactor.

2. Process according to the preceding claim, **characterized in that** the process is carried out in batch mode and the liquid phase **A2** contained in said reactor is withdrawn, preferably continuously, to supply said at least one mixing device in step ii).

3. Process according to either one of the preceding claims, **characterized in that** said process comprises step v) of repeating steps ii) to iv) until a liquid phase **A2** comprising at least 95% by weight of bis(fluorosulfonyl)imide is obtained.

4. Process according to any one of the preceding claims, **characterized in that** the hydrofluoric acid is in gaseous form and said at least one mixing device is a water scrubber.

5. Process according to any one of the preceding Claims 1 to 3, **characterized in that** the hydrofluoric acid is in liquid form and said at least one mixing device is a static mixer.
